# FASCICULE DE BREVET EUROPEEN

(11) **EP 0 635 330 B1**
(45) Date de publication et mention de la délivrance du brevet: **08.01.1997**
(21) Numéro de dépôt: 94401656.7
(22) Date de dépôt: 19.07.1994
(51) Int. Cl.: B23K 9/29

(54) **Torche miniaturisée pour le soudage tig, à efficacité renforcée**
Verkleinerter T.I.G. Schweissbrenner mit verbesserten Wirkungsgrad
Miniaturized T.I.G. welding torch, with enhanced efficiency

(30) Priorité: 20.07.1993 FR 9308876
(43) Date de publication de la demande: 25.01.1995
(73) Titulaire: COMPAGNIE GENERALE DES MATIERES NUCLEAIRES (COGEMA), F-78141 Vélizy-Villacoublay (FR)
(72) Inventeur: Cornu, Jean, F-44200 Nantes (FR); Hennion, Pierre, F-44300 Nantes (FR); Rousseau, Claude, F-75015 Paris (FR)
(74) Mandataire: Dubois-Chabert, Guy

(56) Documents cités:
- EP-A- 0 151 100
- FR-A- 1 010 110
- US-A- 3 549 855
- US-A- 4 692 584

## Description

La présente invention concerne une torche miniaturisée pour le soudage à l'arc, avec électrode réfractaire et sous atmosphère protectrice, à efficacitié renforcée.

Comme cela est bien connu, il existe différents types de dispositifs de soudage parmi lesquels on peut citer la technique TIG (abréviation de l'expression anglo-saxonne Tungsten Inert Gas) correspondant à un soudage à l'arc dans une ambiance de gaz inerte et la technique de soudage par arc plasma avec constriction du plasma.

Les conclusions généralement admises, relatives aux limites des procédés TIG et plasma pour effectuer du raboutage de tubes par soudage en toutes positions, sont les suivantes :
- pour des épaisseurs de 1 à 3,2 mm, on utilise le soudage TIG pulsé bord à bord ;
- pour des épaisseurs supérieures à 3,2 mm, on utilise le soudage TIG pulsé avec bords chanfreinés et apport de métal ;
- pour des épaisseurs de 7 à 8 mm, on utilise le soudage plasma pulsé bord à bord ;
- pour des épaisseurs supérieures à 8 mm, on utilise le soudage plasma avec bords chanfreinés et apport de métal.

L'épaisseur soudable de 3,2 mm en TIG pulsé n'est obtenue qu'avec de multiples protections, le procédé étant alors poussé jusque dans ses limites extrêmes, entraînant des difficultés de reproductibilité.

L'expérience montre que, notamment pour la mise en oeuvre de processus automatiques et en particulier ceux qui sont téléopérés, l'utilisation d'apport de métal complique singulièrement les opérations de soudage en entraînant un contrôle de correction de position, de vitesse et parfois d'oscillation de l'ensemble torche-dispositif d'amenée du fil d'apport. La mise en oeuvre en téléopération de têtes orbitales (pour le soudage de tubes) avec métal d'apport conduit en conséquence à adjoindre à l'outil de soudage les fonctions nécessaires à la prise en compte de ces paramètres.

L'usinage de chanfreins implique, dans les milieux hautement actifs comme les réacteurs nucléaires, d'avoir à utiliser une machine à chanfreiner et de récupérer les copeaux correspondants, de satisfaire aux contraintes d'encombrement du dispositif de dévidage et de réserve de fil d'apport, à la complexité du contrôle de l'impact du fil dans l'arc, de son oscillation, etc.

Le soudage plasma étant, lui, trop énergétique, il n'existe pas actuellement de torche de soudage miniaturisée permettant de souder bord à bord et sans fil d'apport des épaisseurs comprises entre 3,2 et 7 mm.

On connaît, par le document FR-A-2 514 279, une torche de soudage à arc selon le préambule de la revendication 1, dans laquelle on trouve une électrode axiale et deux buses annulaires permettant de créer deux nappes cylindriques concentriques autour de la zone d'établissement de l'arc permettant, d'une part de protéger la zone de bain fondu des pièces à souder et, d'autre part, d'améliorer la concentration de l'énergie produite par l'arc électrique. Cette torche de soudage présente l'avantage de souder très rapidement. Elle est notamment utilisée en soudage manuel et pour les bancs de raboutage de tôles. Elle est cependant très encombrante. Elle ne permet pas d'obtenir dans des conditions fiables et répétitives le soudage sans métal d'apport de deux pièces bord à bord dont l'épaisseur est comprise entre 3 et 7 mm.

On s'est aperçu d'autre part que la précision du positionnement de l'électrode réfractaire de la torche, sa forme et son revêtement sont des paramètres importants à partir de certaines épaisseurs de soudage bord à bord. Jusqu'à 4 à 5 mm d'épaisseur, la forme et le revêtement de l'électrode n'ont pas une importance fondamentale. Pour des épaisseurs de l'ordre de 6 à 7 mm, la forme et le revêtement de l'électrode importent particulièrement.

D'autre part, le maintien de l'électrode réfractaire est obtenu, dans les dispositifs de l'art connu, par une pince à griffes, située à l'extrémité de l'électrode qui est opposée à l'arc. Ce système de maintien de l'électrode nuit à son positionnement.

Un autre inconvénient de l'utilisation d'une pince à griffes pour le maintien de l'électrode réside dans la difficulté de réaliser le changement de l'électrode dans un milieu hostile.

La présente invention a été réalisée pour concevoir une torche miniaturisée pour le soudage à l'arc, sans métal d'apport et bord à bord, de pièces d'épaisseur comprise entre 3 et 7 mm.

L'invention a pour objet une torche miniaturisée pour le soudage à l'arc selon la revendication 1.

La constriction pneumatique due au double flux convergent permet la miniaturisation de la torche alors qu'une constriction magnétique ne le permettrait pas à cause du volume nécessaire aux aimants.

Avantageusement, le corps possède une jupe axiale percée d'un trou axial pour le passage de l'électrode et une jupe périphérique centrée sur l'axe de la torche, le premier manchon étant fixé sur la jupe axiale, le deuxième manchon étant fixé sur la jupe périphérique.

Le centreur peut être pourvu de passages pour le premier flux de gaz de protection.

Le premier flux de gaz de protection peut être véhiculé dans le corps de la torche par des trous prévus dans la jupe axiale.

Le deuxième flux de protection peut être véhiculé par des trous pratiqués dnas le corps pour transiter dans une zone comprise entre la jupe axiale et la jupe périphérique.

De préférence, le convergent du premier manchon présente un angle au sommet compris entre 7° et 9°.

De préférence également, le deuxième manchon comporte, vers l'extrémité de l'électrode où doit se développer l'arc, une portion tronconique se terminant par une portion cylindrique.

L'électrode peut être maintenue dans le corps par la pression d'un ressort. Ceci présente l'avantage de pouvoir retirer facilement l'électrode par son extrémité active par simple traction et de pouvoir la remplacer tout aussi facilement, l'alimentation électrique de l'électrode se faisant par simple contact méchanique.

Le corps de l'électrode peut être en tungstène au thorium ou au cérium.

D'autres caractéristiques et avantages de la présente invention apparaîtront mieux à la lecture de la description qui suit d'un mode de réalisation de l'invention donné à titre d'exemple non limitatif. La description se réfère aux dessins annexés parmi lesquels :
- la figure 1 est une vue en coupe verticale de la torche de soudage à l'arc sensiblement à l'échelle 4 ;
- la figure 2 est une vue montrant une étape préliminaire de réalisation d'une électrode réfractaire ; et
- la figure 3 montre la phase de finition de cette électrode.

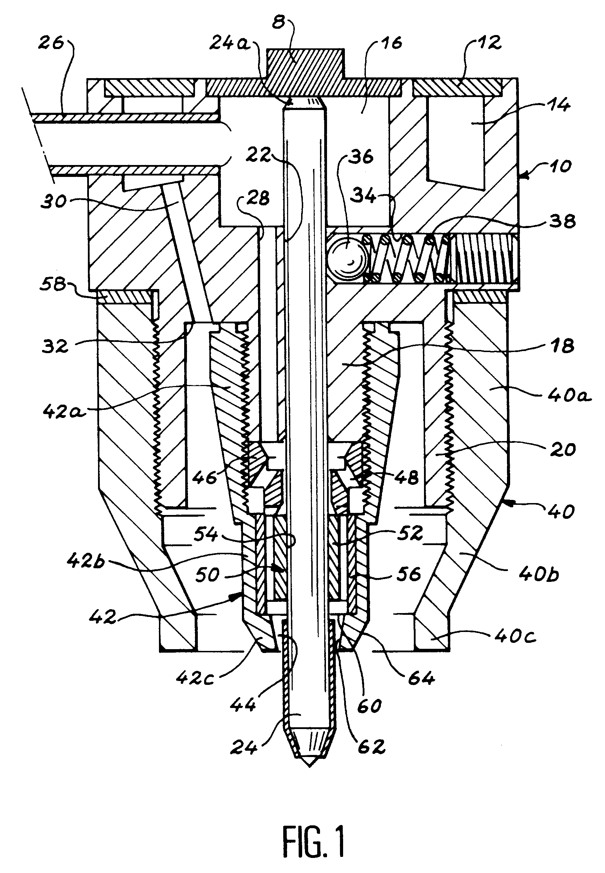

En se référant tout d'abord à la figure 1, on va décrire l'ensemble du dispositif de soudage à l'arc qui sera appelé ultérieurement torche de soudage.

La torche de soudage comporte un corps 10 comprenant à sa partie supérieure un premier espace annulaire 14 et un espace central 16. L'espace annulaire 14 et l'espace central 16 sont fermés respectivement par des plaques 12 et 8 soudées sur le corps 10. Le corps 10 se prolonge par une jupe axiale 18 et par une jupe périphérique 20. La jupe axiale 18 définit un trou axial 22 servant notamment à l'introduction de l'électrode réfractaire 24. Le corps 10 ou la plaque 8 est traversé par une première tubulure 26 qui débouche dans la cavité axiale 16 pour alimenter celle-ci avec un premier gaz dit central. La jupe axiale 18 est percée par des trous longitudinaux 28 qui relient la cavité 16 à l'extrémité de la jupe 18. En outre, le corps 10 est percé de trous 30 qui relient la cavité annulaire 14 à la face libre 32 du corps 10 à l'intérieur de la zone disposée entre la jupe périphérique 20 et la jupe axiale 18. La cavité annulaire 14 est reliée à une deuxième tubulure, non représentée sur les figures, permettant d'alimenter celle-ci avec un deuxième gaz dit gaz annulaire comme on l'expliquera ultérieurement.

Dans le corps 10, on trouve également un passage radial 34 dans lequel sont engagés, d'une part, une bille 36 et, d'autre part, un ressort 38 agissant sur la bille 36. Le passage 34 débouche dans le trou 22 selon une ouverture réduite pour empêcher la bille 36 de passer dans ce trou en cas d'absence de l'électrode 24. La bille 36 est destinée à immobiliser en translation l'électrode 24 lorsque celle-ci est engagée en butée dans l'alésage axial 22 du corps de la torche de soudage 10. L'alimentation électrique de l'électrode est assurée par une tresse de raccordement électrique reliée au corps 10 ou à la plaque conductrice 8. Sur le corps 10 sont montés, par exemple par vissage et interposition de la rondelle 58, deux manchons, respectivement externe 40 et interne 42, qui définissent en coopération deux buses pour la création de deux nappes gazeuses de révolution comme on l'expliquera ultérieurement. Plus précisément, le manchon externe 40 comporte une partie cylindrique 40a, une partie tronconique 40b qui définit ainsi un convergent et une partie terminale cylindrique 40c de longueur réduite. Le manchon interne 42 comprend une première partie 42a, qui sert à sa fixation sur la jupe interne 18 du corps de la torche et au maintien de pièces qui seront explicitées ultérieurement, et une deuxième partie 42b qui définit un canal 44 autour de l'électrode 24 pour la création d'une nappe de révolution de gaz inerte. A l'intérieur de la première partie 42a du manchon axial 42, on trouve une première pièce de révolution 46 en matériau réfractaire qui définit plusieurs canaux tels que 48 pour permettre le passage du gaz central circulant dans les trous 28. Cette première pièce 46 est en appui sur une première extrémité d'un centreur 50 réalisé en matériau réfractaire, par exemple de l'alumine. Cet appui se fait tout en laissant des passages pour le gaz central. La pièce 46 peut par exemple reposer sur le centreur 50 grâce à des pieds. Le centreur 50 comporte d'une part une partie axiale 52 présentant un alésage axial 54 dont le diamètre est apparié avec le diamètre externe de l'électrode 24 et d'autre part une partie périphérique 56 de fixation dans le manchon 42, ces deux parties étant reliées par des ailettes radiales non visibles sur la figure. Le centreur 50 repose sur un épaulement interne 60 du manchon 42.

On comprend qu'ainsi l'électrode 24 est parfaitement centrée et immobilisée par rapport au manchon interne 42, son extrémité 24a étant en appui sur la plaque 8. Il en résulte que l'espace entre l'extrémité 42c du manchon 42 et la périphérie de l'électrode 24 définit un canal annulaire rigoureusement régulier. De plus, grâce à ce centreur et à la plaque 8, la position de l'extrémité de l'électrode est parfaitement définie. Il faut de plus préciser que, au-delà de l'épaulement 60, la face interne 62 du manchon 42 présente une surface conique définissant un convergent. De même, à proximité de son extrémité, la face externe 64 du manchon 42 présente également une surface tronconique qui, en coopération avec la. partie convergente 40b du manchon externe 40, définit ainsi un convergent pour le gaz arrivant dans l'espace annulaire 14 du corps 10 de la torche de soudage.

Dans un exemple d'utilisation du dispositif de soudage, selon l'invention, on a soudé bout à bout par soudage orbital, sans apport de métal, des tubes ayant les caractéristiques suivantes :
- nature : acier inoxydable austénitique Z2CN 18.10,
- dimensions : diamètre 60 mm, épaisseur de la paroi 6 mm.

Les résultats de la soudure obtenue étaient très satisfaisants.

De préférence, l'angle au sommet du convergent 64 est compris entre 7° et 9° et, de préférence encore, égal à 8°. Le diamètre interne d de l'extrémité 42c du manchon interne est de préférence égal à 4,2 mm alors que le diamètre externe de l'électrode 24 est de 2,4 mm.

Le gaz central sortant par le manchon 42 est un mélange de 95% d'argon et de 5% d'hydrogène. Son débit est compris entre 1 l/mn et 3,5 l/mn et, de préférence, de l'ordre de 2 l/mn. Le gaz annulaire est un mélange à 70% d'hélium et 30% d'argon. Son débit est compris entre 10 et 20 l/mn et, de préférence, égal à 15 l/mn. Ces mélanges gazeux sont distribués en France par la société Air Liquide sous les. dénominations Noxal 3 et Inarc 9. Il va de soi pour l'homme de l'art qu'on pourrait utiliser d'autres mélanges gazeux couramment utilisés pour le soudage avec électrode réfractaire.

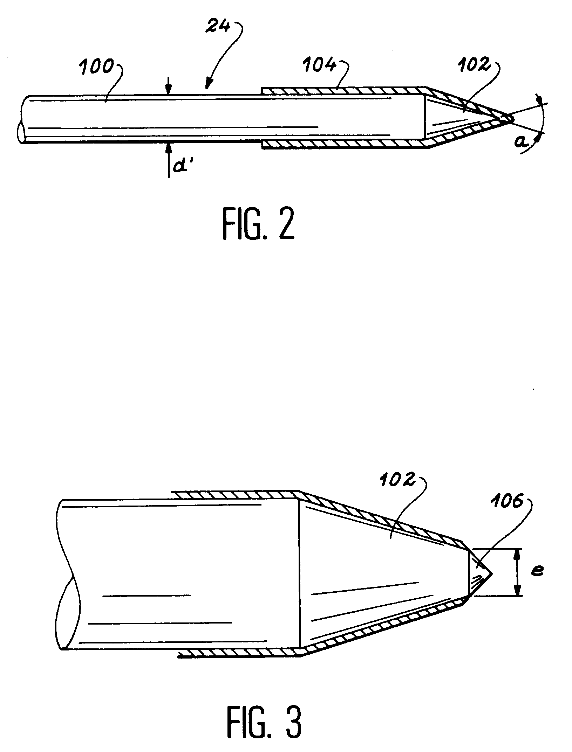

En se référant maintenant aux figures 2 et 3, on va décrire un mode préféré de réalisation de l'électrode réfractaire utilisée dans la torche de soudage miniaturisée.

Le corps cylindrique 100 de l'électrode 24 présente un diamètre d' de 2,4 mm. Il se termine par une pointe 102 conique dont l'angle au sommet a est compris entre 20° et 30°. De préférence, il est égal à 25°. Le corps est réalisé en tungstène à 2,2% d'oxyde de thorium. Dans une première étape, on recouvre une partie du corps cylindrique 100 et la pointe 102 avec une couche 104 de molybdène. Cette couche a de préférence une épaisseur de l'ordre de 10 µm et elle est déposée sous vide. Dans une deuxième étape, on usine l'extrémité de la pointe 102 pour définir un cône terminal 106 comme le montre la figure 3. Ce cône présente un angle au sommet compris entre 80 et 100°. De préférence, l'angle au sommet est égal à 90°. Le diamètre e de la base du cône terminal est d'environ 1,5 mm.

Eventuellement, l'électrode est préalablement amorcée par haute fréquence en maintenant un arc électrique d'une certaine intensité pendant un temps court sur un montage spécifique. Cette étape est une des méthodologies qui permet de garantir la bonne géométrie de l'extrémité de l'électrode et évite, lors de l'utilisation normale de l'électrode, des inclusions éventuelles de tungstène dans le bain de soudage.

Les essais réalisés avec cette électrode montrent que l'extrémité de l'arc reste ponctuellement parfaitement centrée, au lieu de s'amorcer autour de la pointe et d'être, le plus souvent, vagabond. En outre, pour une même pénétration du métal, elle permet d'abaisser la valeur maximale de l'intensité du courant.

Le procédé est plus spécialement intéressant lorsque les pièces à souder ont une épaisseur comprise entre 3 et 7 mm. Cependant, il va de soi que ce procédé peut a fortiori être utilisé pour le soudage de pièces dont l'épaisseur est inférieure à 3 mm.

## Revendications

1. Torche miniaturisée pour le soudage à l'arc, avec électrode réfractaire et sous atmosphère protectrice, comprenant un corps (10) supportant :
- une électrode cylindrique (24) en matériau réfractaire définissant un axe pour la torche et constituée par un corps cylindrique (100) dont l'extrémité où doit se développer l'arc se termine en pointe (102),
- un premier manchon (42) entourant l'électrode vers l'extrémité de l'électrode où doit se développer l'arc, délimitant un canal (44) entre une paroi interne (62) et l'électrode (24) pour le passage d'un premier flux de gaz de protection,
- un deuxième manchon (40) entourant le premier manchon (42), délimitant un canal entre sa paroi interne et la paroi externe du premier manchon pour le passage d'un deuxième flux de gaz de protection, constituant en association avec le premier manchon un convergent pour le deuxième flux de gaz,
- des premiers moyens d'alimentation (26, 16, 28, 48) du premier manchon (42) en gaz de protection,
- des deuxièmes moyens d'alimentation (14, 30) du deuxième manchon (40) en gaz de protection,
- des moyens d'alimentation électrique (8) de l'électrode,
- des moyens de centrage de ladite électrode (24),
caractérisée en ce que :
- le premier manchon (42) constitue un convergent pour le premier flux de gaz,
- les moyens de centrage sont situés vers l'extrémité de l'électrode où doit se développer l'arc et comprennent un centreur (50) qui est une pièce solidaire du corps (10) de la torche et qui est centrée sur l'axe de la torche, le centreur possédant un alésage axial (54) pour le passage et le positionnement de l'électrode (24),
- l'électrode (24) est maintenue dans le corps (10) de la torche par des moyens de pression,
- l'extrémité de l'électrode (24) où doit se développer l'arc est recouverte d'une couche de matériau (104) non émissif à haute température, le bout de la pointe (102) étant dépourvu de cette couche de matériau non émissif.

2. Torche selon la revendication 1, caractérisée en ce que le corps (10) possède une jupe axiale (18) percée d'un trou axial (22) pour le passage de l'électrode (24) et une jupe périphérique (20) centrée sur l'axe de la torche, le premier manchon (42) étant fixé sur la jupe axiale (18), le deuxième manchon (40) étant fixé sur la jupe périphérique (20).

3. Torche selon l'une des revendications 1 ou 2, caractérisée en ce que le centreur (50) est logé dans le premier manchon (42).

4. Torche selon l'une quelconque des revendications 1 à 3, caractérisée en ce que le centreur (50) est pourvu de passages pour le premier flux de gaz de protection.

5. Torche selon l'une quelconque des revendications 2 à 4, caractérisée en ce que le premier flux de gaz de protection est véhiculé dans le corps (10) de la torche par des trous (28) prévus dans la jupe axiale (18).

6. Torche selon l'une quelconque des revendications 2 à 5, caractérisée en ce que le deuxième flux de gaz de protection est véhiculé par des trous (30) pratiqués dans le corps (10) pour transiter dans une zone comprise entre la jupe axiale (18) et la jupe périphérique (20).

7. Torche selon l'une quelconque des revendications 1 à 6, caractérisée en ce que le convergent du premier manchon (42) présente un angle au sommet compris entre 7° et 9°.

8. Torche selon l'une quelconque des revendications 1 à 7, caractérisée en ce que le deuxième manchon (40) comporte, vers l'extrémité de l'électrode où doit se développer l'arc, une portion tronconique (40b) se terminant par une portion cylindrique (40c).

9. Torche selon l'une quelconque des revendications 1 à 8, caractérisée en ce que l'électrode (24) est maintenue dans le corps (10) par la pression d'un ressort (38), l'alimentation électrique de l'électrode se faisant par contact mécanique.

10. Torche selon l'une quelconque des revendications 1 à 9, caractérisée en ce que le matériau non émissif est du molybdène.

11. Torche selon la revendication 10, caractérisée en ce que la couche de molybdène est comprise entre 5 µm et 20 µm.

12. Torche selon l'une quelconque des revendications 1 à 11, caractérisée en ce que la pointe (102) de l'électrode (24) est tronconique et possède un angle au sommet compris entre 20° et 30°, et en ce que le bout (106) de la pointe est une partie conique d'angle au sommet compris entre 80° et 100°.

13. Torche selon l'une quelconque des revendications 1 à 12, caractérisée en ce que le corps cylindrique (100) de l'électrode (24) est en tungstène au thorium ou au cérium.

## Claims

1. Miniaturized torch for gas-shielded refractory-electrode arc welding, comprising a body (10) which supports:
- a cylindrical electrode (24) made of refractory material defining an axis for the torch and consisting of a cylindrical body (100) whose end where the arc is to develop terminates in a tip (102);
- a first sleeve (42) surrounding the electrode near the end of the electrode where the arc is to develop, delimiting a channel (44) for a first flow of shielding gas to pass between an inner wall (62) and the electrode (24);
- a second sleeve (40) surrounding the first sleeve (42) and delimiting, between its inner wall and the outer wall of the first sleeve, a channel for a second flow of shielding gas to pass, forming together with the first sleeve a combining cone for the second flow of gas;
- first means (26, 16, 28, 48) for supplying the first sleeve (42) with shielding gas;
- second means (14, 30) for supplying the second sleeve (40) with shielding gas;
- means (8) for supplying electric power to the electrode;
- means for centring the said electrode (24);
characterized in that:
- the first sleeve (42) constitutes a combining cone for the first flow of gas;
- the centring means are located towards the end of the electrode where the arc is to develop and comprise a centring piece (50) which is a piece fastened to the body (10) of the torch and which is centred on the axis of the torch, the centring piece having an axial bore (54) for the passage and positioning of the electrode (24);
- the electrode (24) is held in place in the body (10) of the torch by pressure means;
- the end of the electrode (24) where the arc is to develop is covered with a layer of material (104) which is non-emissive at high temperature, the end of the tip (102) being devoid of this layer of non-emissive material.

2. Torch according to Claim 1, characterized in that the body (10) has an axial skirt (18), drilled with an axial hole (22) for the passage of the electrode (24), and a peripheral skirt (20) centred on the axis of the torch, the first sleeve (42) being fixed to the axial skirt (18) and the second sleeve (40) being fixed to the peripheral skirt (20).

3. Torch according to either of Claims 1 and 2, characterized in that the centring piece (50) is housed in the first sleeve (42).

4. Torch according to any one of Claims 1 to 3, characterized in that the centring piece (50) is provided with passages for the first flow of shielding gas.

5. Torch according to any one of Claims 2 to 4, characterized in that the first flow of shielding gas is conveyed in the body (10) of the torch via holes (28) provided in the axial skirt (18).

6. Torch according to any one of Claims 2 to 5, characterized in that the second flow of shielding gas is conveyed via holes (30) made in the body (10) in order to be forwarded into a region lying between the axial skirt (18) and the peripheral skirt (20).

7. Torch according to any one of Claims 1 to 6, characterized in that the combining cone of the first sleeve (42) makes a vertex angle of between 7° and 9°.

8. Torch according to any one of Claims 1 to 7, characterized in that the second sleeve (40) includes, towards the end of the electrode where the arc is to develop, a frustoconical portion (40b) terminating in a cylindrical portion (40c).

9. Torch according to any one of Claims 1 to 8, characterized in that the electrode (24) is held in place in the body (10) by the pressure of a spring (38), the electrode being supplied with electric power via a mechanical contact.

10. Torch according to any one of Claims 1 to 9, characterized in that the non-emissive material is molybdenum.

11. Torch according to Claim 10, characterized in that the layer of molybdenum is between 5 µm and 20 µm.

12. Torch according to any one of Claims 1 to 11, characterized in that the tip (102) of the electrode (24) is frustoconical and has a vertex angle of between 20° and 30°, and in that the end (106) of the tip is a conical part having a vertex angle of between 80° and 100°.

13. Torch according to any one of Claims 1 to 12, characterized in that the cylindrical body (100) of the electrode (24) is made of thorium- or cerium-modified tungsten.

## Patentansprüche

1. Verkleinerter Schweißbrenner zum Elektroschweißen in einer Schutzgasatmosphäre mit einer hitzebeständigen Elektrode mit einem Körper (10), der umfaßt:
- eine zylindrische Elektrode (24) ans hitzebeständigem Material, die eine Achse für den Schweißbrenner bildet, und durch einen zylindrischen Körper (100) gebildet ist, dessen Ende, an dem sich der Lichtbogen entwickelt, in einer Spitze (102) endet,
- eine erste Muffe (42), die die Elektrode an dem Ende der Elektrode, an dem sich der Lichtbogen entwickeln muß, umgibt und die einen Kanal (44) zwischen einer Innenwand (62) und der Elektrode (24) für den Durchfluß eines ersten Schutzgasstroms begrenzt,
- eine zweite Muffe (40), die die erste Muffe (42) umgibt und die einen-Kanal zwischen ihrer Innenwand und der Außenwand der ersten Muffe für den Durchfluß eines zweiten Schutzgasstroms begrenzt, wobei Sie in Verbindung mit der ersten Muffe ein Mischrohrteil für den zweiten Gasstrom bildet,
- erste Schutzgaszufuhrmittel (26, 16, 28, 48) für die erste Muffe (42),
- zweite Schutzgaszufuhrmittel (14, 30) für die zweite Muffe (40),
- elektrische Versorgungsmittel (8) für die Elektrode,
- Zentriereinrichtungen für die Elektrode (24),
**dadurch gekennzeichnet, daß**
- die erste Muffe (42) ein Mischrohrteil für den ersten Gasstrom bildet,
- die Zentriereinrichtungen an dem Ende der Elektrode, an dem sich der Lichtbogen entwickeln muß, angeordnet sind und einen Zentrierer (50) aufweisen, der ein mit dem Schweißbrennerkörper (10) verbundenes Teil ist und auf der Schweißbrennerachse zentriert ist, wobei der Zentrierer eine male Bohrung (54) für das Durchführen und Positionieren der Elektrode (24) aufweist,
- die Elektrode (24) durch Preßteile in dem Schweißbrennerkörper (10) gehalten ist,
- das Ende der Elektrode (24), wo sich der Lichtbogen entwichein muß, mit einer Schicht eines Materials (104) überzogen ist, das bei hoher Temperatur nicht strahlend ist, wobei das Kopfende der Spitze (102) von dieser Schicht aus nicht strahlendem Material befreit ist.

2. Schweißbrenner nach Anspruch 1, **dadurch gekennzeichnet, daß** der Körper (10) eine von einer axialen Öffnung (22) für die Durchführung der Elektrode (24) durchbrochene axiale Hülse (18) und eine auf der Schweißbrennerachse zentrierte Umfangshülse (20) besitzt, wobei die erste Muffe (42) auf der axialen Hülse (18) und die zweite Muffe (40) auf der Umfangshülse (20) befestigt ist.

3. Schweißbrenner nach Anspruch 1 oder 2, **dadurch gekennzeichnet, daß** der Zentrierer (50) in der ersten Muffe (42) angeordnet ist.

4. Schweißbrenner nach einem der Ansprüche 1 bis 3, **dadurch gekennzeichnet, daß** der Zentrierer (50) mit Durchgängen für den ersten Schutzgasstrom versehen ist

5. Schweißbrenner nach einem der Ansprüche 2 bis 4, **dadurch gekennzeichnet, daß** der erste Schutzgasstrom in dem Schweißbrennerkörper (10) durch in der axialen Hülse (18) vorgesehene Öffnungen (28) geführt ist.

6. Schweißbrenner nach einem der Ansprüche 2 bis 5, **dadurch gekennzeichnet, daß** der zweite Schutzgasstrom durch in dem Körper (10) ausgeführte Öffnungen (30) geführt ist, um eine zwischen der axialen Hülse (18) und der Umfangshülse (20) befindliche Zone zu passieren.

7. Schweißbrenner nach einem der Ansprüche 1 bis 6, **dadurch gekennzeichnet, daß** das Mischrohrteil der ersten Muffe (42) einen Spitzenwinkel zwischen 7° und 9° hat.

8. Schweißbrenner nach einem der Ansprüche 1 bis 7, **dadurch gekennzeichnet, daß** die zweite Muffe (40) an dem Ende der Elektrode hin, in dem sich der Lichtbogen entwickeln muß, einen kegelförmigen Bereich (40b) aufweist, der in einem zylindrischen Bereich (40c) endet.

9. Schweißbrenner nach einem der Ansprüche 1 bis 8, **dadurch gekennzeichnet, daß** die Elektrode (24) durch den Druck einer Feder (38) in dem Körper (10) gehalten ist, wobei die Energieversorgung der Elektrode durch mechanischen Kontakt erfolgt.

10. Schweißbrenner nach einem der Ansprüche 1 bis 9, **dadurch gekennzeichnet, daß** das nicht strahlende Material Molybdän ist.

11. Schweißbrenner nach Anspruch 10, **dadurch gekennzeichnet, daß** die Molybdänschicht im Bereich zwischen 5µm und 20µm liegt.

12. Schweißbrenner nach einem der Ansprüche 1 bis 11, **dadurch gekennzeichnet, daß** die Spitze (102) der Elektrode (24) kegelstumpfförmig ist und eine Spitzenwinkel zwischen 20° und 30° bat und daß das Kopfende (106) der Spitze ein konischer Teil mit einem Spitzenwinkel zwischen 80° und 100° ist.

13. Schweißbrenner nach einem der Ansprüche 1 bis 12, **dadurch gekennzeichnet, daß** der zylindrische Körper (100) der Elektrode (24) ans Wolfram oder Thorium oder Zerium ist.
